# EUROPÄISCHE PATENTSCHRIFT

(11) **EP 2 154 396 B1**
(45) Veröffentlichungstag und Bekanntmachung des Hinweises auf die Patenterteilung: **16.11.2011**
(21) Anmeldenummer: 09005976.7
(22) Anmeldetag: 30.04.2009
(51) Int. Cl.: F16H 59/02, F16H 59/04

(54) **Gebergerät für eine Gangschaltung**
Transmitting device for a gearshift
Appareil transmetteur pour un passage de vitesse

(30) Priorität: 07.08.2008 DE 102008036871
(43) Veröffentlichungstag der Anmeldung: 17.02.2010
(73) Patentinhaber: WABCO GmbH, 30432 Hannover (DE)
(72) Erfinder: Klück, Frank-Peter, 31832 Springe (DE); Lülfing, Ralph-Carsten, 30826 Garbsen (DE); Schulz, Marcus, 31535 Neustadt (DE)

(56) Entgegenhaltungen:
- DE-A1- 3 133 250
- DE-A1- 3 516 783
- DE-A1- 3 905 769
- DE-T5-112006 000 491
- DE-U1- 20 107 869
- DE-U1- 20 206 727
- JP-A- 7 234 738
- US-A- 4 991 535

## Beschreibung

Die Erfindung bezieht sich auf ein Gebergerät für eine Gangschaltung gemäß dem Oberbegriff des Patentanspruchs 1.

Bei derartigen Gebergeräten, insbesondere bei solchen Geräten, bei denen in der Konsole oder im Griff des Schalthebels empfindliche elektronische Bauelemente angeordnet sind, besteht die Gefahr, dass Flüssigkeiten von oben in das Gebergerät eindringen und die enthaltenen Bauteile schädigen können. So ist es schon vorgekommen, dass einem Lastwagenfahrer während einer Kaffeepause die Kaffeetasse umgekippt ist und Kaffee durch Spalte in den Schalthebel oder in die Konsole des Gebergerätes eingedrungen ist. Im Ergebnis kann hierdurch die Elektronik beschädigt oder sogar die Funktion ganz ausgeschaltet werden.

Aus der gattungsgemäßen DE 11 2006 000 491 T5 ist ein Schalthebel für Kraftfahrzeuge bekannt, der auf einer Konsole angeordnet ist. Im Knauf des Schalthebels ist in einer zylindrischen Kammer ein Knopf angeordnet, der mechanisch über eine Stange im Innern des Schalthebels mit der Konsole verbunden ist. Durch Betätigung des Knopfes können bestimmte Funktionen des Getriebes aktiviert werden.

Dabei ist es möglich, dass Flüssigkeiten in den Spalt zwischen Knopf und Knauf eindringt und durch den Schalthebel bis in die Konsole vordringen kann.

Ein weiteres gattungsgemäßes Gebergerät ist aus der DE 39 05 769 A1 bekannt. Diese zeigt einen elektrischen Fahrschalter, mit einem Schalthebelgriff, der zwei Taster zum Hoch- bzw. Rückschalten der Gänge aufweist. Die Taster sind über eine Verdrahtung, welche sich durch den Schalthebel erstreckt, mit einer in der Konsole befindlichen Elektronik verbunden.

Auch hier kann Feuchtigkeit durch den Schalthebel ins Innere der Konsole eindringen. Dies kann insbesondere dann der Fall sein, wenn die Abdichtungen der Taster durch häufigen Gebrauch oder wegen Alterung nicht mehr in einem einwandfreien Zustand sind.

Ein anderes gattungsgemäßes Gebergerät ist aus der DE 35 16 783 A2 bekannt.

Der Erfindung liegt die Aufgabe zugrunde, ein Gebergerät für eine Gangschaltung gemäß dem Oberbegriff des Patentanspruchs 1 anzugeben, bei welchem die oben beschriebene Gefahr des Eindringens von Flüssigkeiten in Innenräume, in denen sich empfindliche Elektroniken befinden, dauerhaft auszuschließen ist.

Diese Aufgabe wird durch die im Patentanspruch 1 enthaltene Erfindung gelöst. Die Unteransprüche enthalten zweckmäßige Weiterbildungen.

Die Erfindung wird im Folgenden anhand einer Zeichnung näher erläutert. Diese zeigt in
- Fig. 1: eine Schnittzeichnung eines erfindungsgemäßen Gebergerätes, und in
- Fig. 2: eine vergrößerte Darstellung der im Griff befindlichen Elemente.

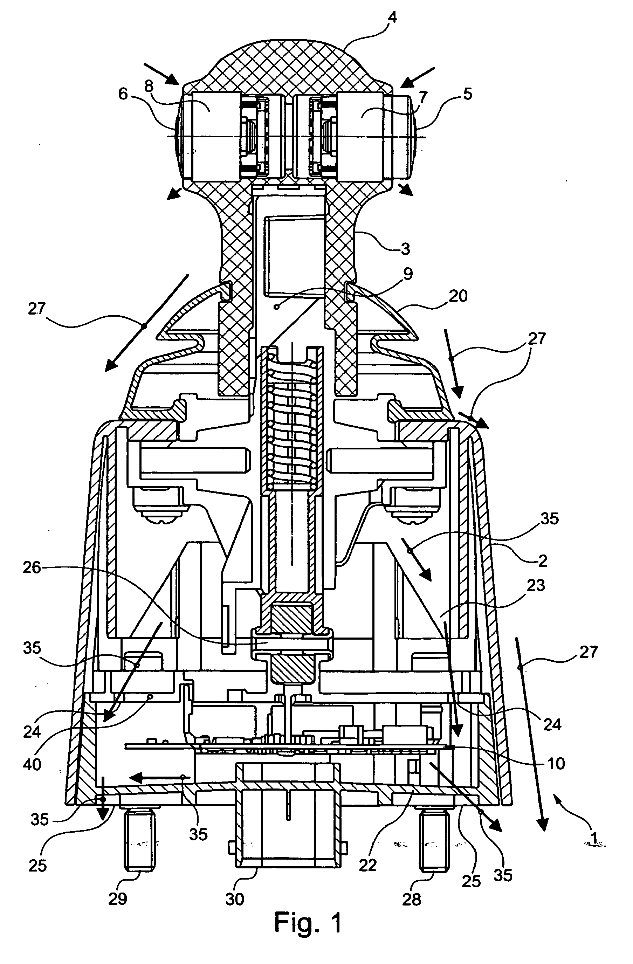

Die Figur 1 zeigt das erfindungsgemäße Gebergerät (1) in einer SchnittDarstellung. Das Gebergerät (1) besteht im Wesentlichen aus einer Konsole (2) und einem Schalthebel (3). Dieser ist gegenüber der Konsole (2) mittels eines Scharniergelenks (26) schwenkbar gelagert. Der Oberteil des Schalthebels (3) bildet einen Griff (4) zur Betätigung desselben. Am Griff (4) befinden sich seitlich zwei Bedienelemente (5, 6), mit denen verschiedene Funktionen, beispielsweise der Neutral-Gang, ein optimaler Gang oder ein Anfahrgang angewählt werden können.

Die beiden Bedienelemente (5, 6) sind erfindungsgemäß in vollständig gegenüber dem Inneren des Schalthebels (3) abgetrennten Kammern (7, 8) angeordnet. Hierdurch wird gewährleistet, dass keine Flüssigkeiten, die eventuell in die Ringspalte zwischen den Bedienelementen (5, 6) und den Kammern (7, 8) eingedrungen sind, weiter in den Innenraum (9) des Griffes (3) und ins Innere der Konsole (2) bis zu einer dort angeordneten Elektronik (10) vordringen können.

Zur Abdichtung des Spaltes zwischen dem schwenkbaren Schalthebel (3) und der Konsole (2) dient ein Balg (20) aus elastischem Material, beispielsweise Gummi. Der Balg (20) ist an seinem oberen Ende in eine Nut des Schalthebels (4) eingespannt und an seinem unteren Ende in eine Nut der Konsole (2) eingespannt. Hierdurch wird verhindert, dass Flüssigkeit in den Spalt zwischen Schalthebel und Konsole eindringen kann. Etwaige Flüssigkeiten werden vielmehr in Richtung der Pfeile (27) außerhalb der Konsole (2) nach unten abgelenkt.

Das Gebergerät (1) wird mittels Schrauben (28, 29) im Führerhaus des Fahrzeugs an geeigneter Stelle befestigt und mittels einer Steckbuchse (30) elektrisch an einen Getriebeaktuator oder an weitere Sensoren angeschlossen.

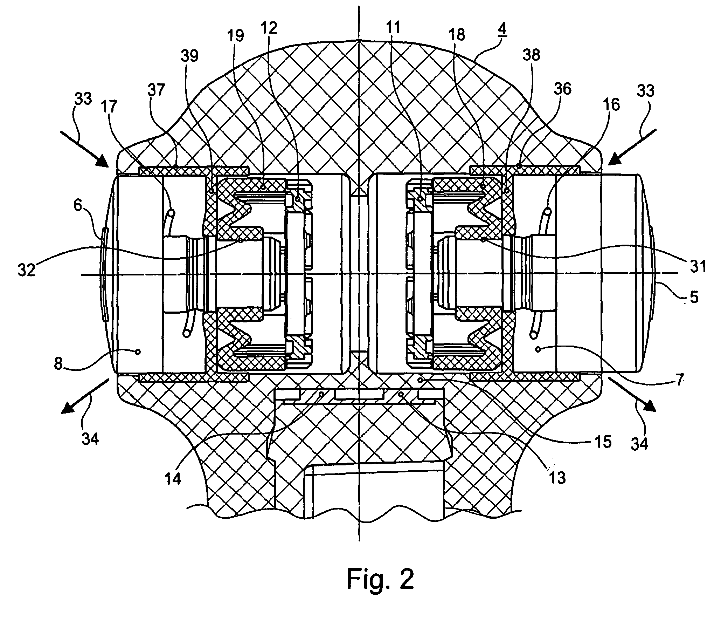

Die Fig. 2 zeigt den Griff (4) des Gebergerätes (1) der Fig. 1 in vergrößerter Darstellung.

Wie man erkennt, sind die Bedienelemente (5, 6) mittels Schnappverbindungen (31, 32) mit Magnethaltern (18, 19) verbunden. Die genannten Magnethalter dienen zur Halterung von zwei ringförmigen Magneten (11, 12).

Die Einheiten aus Magnethalter (18, 19) und Bedienelement (5, 6) sind durch ortsfeste Halter (38, 39) geführt. Diese sind mittels weiterer Schnappverbindungen (36, 37) gegenüber dem Griff (4) gegen Herausfallen gesichert.

Die Bedienelemente (5, 6) stützen sich mittels Federn (16, 17) gegen die ortsfesten Halter (38, 39) ab. Hierdurch können die Bedienelemente (5, 6) zusammen mit den Magnethaltern (18, 19) und den Magneten (11, 12) gegen die Kraft der Federn (16, 17) nach innen geschoben werden.

Beide Bedienelement (5, 6) sind in der unbetätigten Normalstellung gezeichnet. Sie sind als runde Knöpfe ausgebildet. Der rechte Knopf ist länger, deshalb steht er unbetätigt vor. Auf diesem Knopf können unterschiedliche Funktionen liegen. Der linke Knopf schaltet das Getriebe in Neutralstellung. Damit das nicht unbeabsichtigt passiert, ist er im unbetätigten Zustand ebenflächig mit dem Griff angebracht. Das heisst, durch unbeabsichtigtes Schlagen gegen den Griff kann nicht ungewollt der Neutralschalter-Knopf betätigt werden. Mann muss ihn vielmehr bewusst in die Vertiefung drücken.

Beim Betätigen der Bedienelemente (5, 6) werden die damit verbundenen ringförmigen Magnete (11,12) nach innen bewegt. Hierdurch kommen sie in eine Lage, in welcher zwei im Innenraum (9) des Griffes (3) angeordnete, magnetfeldempfindliche Sensoren (13, 14) durch die Magnete (11, 12) aktiviert werden.

Durch die ringförmige Ausbildung der Magnete (11, 12) brauchen die Bedienelemente (5, 6) nicht drehfest geführt zu werden. Vielmehr ist in jeder Drehstellung eine Betätigung der Sensoren (13, 14) möglich. Als Sensoren werden vorzugsweise digitale Hallsensoren verwendet. Die Sensoren sind mit einer Streifenleitung (nicht dargestellt) mit der Elektronik (10), die sich im unteren Teil der Konsole (1) befindet, elektrisch verbunden.

Die magnetische Beeinflussung der Sensoren erfolgt erfindungsgemäß drahtlos durch eine flüssigkeitsdichte Trennwand (15). Durch die somit völlig geschlossene Ausbildung der Kammern (7, 8) ist jedes Eindringen von Flüssigkeit in den Innenraum (9) des Griffes (4) unmöglich gemacht. Etwaige, Flüssigkeiten, die in den Spalt zwischen den Bedienelementen (5, 6) und den Kammern (7, 8) eindringen (siehe Pfeile 33) fließen vielmehr unten (Pfeile 34) wieder heraus, ohne Schaden anrichten zu können.

In der Figur 1 ist auch der Innenraum der Konsole (2) dargestellt. Wie man erkennt, ist die empfindliche Elektronik (10) auf einer Platine im unteren Teil der Konsole (2) angeordnet. Eventuell in der Konsole (2) oder im Innenraum (9) des Griffes (4) entstehendes Kondenswasser wird in Richtung der Pfeile (35) durch Öffnungen (23, 24, 25) nach unten aus der Konsole (2) herausgeleitet. Der Boden der Konsole (2) ist als Schrägfläche (22) ausgebildet.

Das Kondenswasser tropft von oben ab und gelangt durch Öffnungen (24) eines über der Elektronik (10) angeordneten Zwischendeckels (40) gezielt an der empfindlichen Elektronik-Platine vorbei auf die Schrägfläche (22) des Bodenbereichs und von dort durch Öffnungen (25) in Richtung der Pfeile (35) nach draussen. Hierdurch kann hier kein Schaden angerichtet werden.

## Patentansprüche

1. Gebergerät (1) für eine Gangschaltung, insbesondere für Nutzfahrzeuge, mit einer Konsole (2), auf der ein Schalthebel (3) angeordnet ist, wobei der Schalthebel (3) einen Griff (4) aufweist, welcher Bedienelemente (5, 6) enthält,
**dadurch gekennzeichnet, dass**
die Bedienelemente (5, 6) in Kammern (7, 8) angeordnet sind, die zum Innenraum (9) des Griffes (4) flüssigkeitsdicht abgeschlossen sind und dass die Signalübertragung von den Bedienelementen (5, 6) zum Gebergerät (1) drahtlos erfolgt.

2. Gebergerät (1) nach Anspruch 1, **dadurch gekennzeichnet, dass** die Signalübertragung von den Bedienelementen (5, 6) auf eine im Gebergerät (1) angeordnete Elektronik (10) drahtlos mittels Magneten (11, 12) erfolgt, die mit den Bedienelementen (5, 6) verbunden sind und die bei Betätigung der Bedienelemente (5, 6) auf Sensoren (13, 14) im Innenraum (9) des Griffes (4) einwirken.

3. Gebergerät nach Anspruch 2, **dadurch gekennzeichnet, dass** die drahtlose Einwirkung durch eine starre Wand (15) hindurch erfolgt.

4. Gebergerät nach Anspruch 1 bis 3, **dadurch gekennzeichnet, dass** als Sensoren (13, 14) magnetfeldempfindliche Elemente, insbesondere digitale Hallsensoren verwendet werden.

5. Gebergerät nach Anspruch 1 bis 4, **dadurch gekennzeichnet, dass** die Magnete (11, 12) ringförmig ausgebildet sind.

6. Gebergerät nach Anspruch 1 bis 5, **dadurch gekennzeichnet, dass** die Bedienelemente (5, 6) drehbar sind und sich mittels Federn (16, 17) gegen den Griff (4) abstützen.

7. Gebergerät nach Anspruch 1 bis 6, **dadurch gekennzeichnet, dass** die Magnete (11, 12) in je einen Magnethalter (18, 19) aus Kunststoff eingebettet sind.

8. Gebergerät nach Anspruch 7, **dadurch gekennzeichnet, dass** die Magnete (11, 12) in die Magnethalter (18, 19) eingeschnappt sind.

9. Gebergerät nach Anspruch 1 bis 8, **dadurch gekennzeichnet, dass** die Bedienelemente (5, 6) in die Magnethalter (18, 19) eingeschnappt sind.

10. Gebergerät nach Anspruch 1 bis 9, **dadurch gekennzeichnet, dass** ortsfeste Halter (38, 39) vorgesehen sind, die in die Wände der Kammern (7, 8) mit weiteren Schnappverbindungen (36, 37) einschnappbar ausgebildet sind.

11. Gebergerät nach Anspruch 1 bis 10, **dadurch gekennzeichnet, dass** die Bedienelemente (5, 6) mit den Magnethaltern (18, 19) durch zentrale Bohrungen der ortsfesten Halter (38, 39) geführt werden.

12. Gebergerät nach Anspruch 1 bis 11, **dadurch gekennzeichnet, dass** der Schalthebel (3) mittels eines elastischen Balgs (20) gegenüber der Konsole (2) flüssigkeitsdicht abgedichtet ist.

13. Gebergerät nach Anspruch 1 bis 12, **dadurch gekennzeichnet, dass** in der Konsole (2) entstandene kondensierte Feuchtigkeit gezielt über ein System aus einem über der Elektronik (10) angeordneten Zwischendeckel (40), Öffnungen (23, 24, 25), sowie einer Schrägfläche (22) nach unten herausgeleitet wird.

## Claims

1. Signalling device (1) for a gear-shifting means, in particular for utility vehicles, having a console (2) on which a gearshift lever (3) is arranged, wherein the gearshift lever (3) has a grip (4) which contains operator control elements (5, 6), **characterized in that**
the operator control elements (5, 6) are arranged in chambers (7, 8) which are closed off in a fluid-tight fashion from the interior (9) of the grip (4), and **in that** the transmission of signals from the operator control elements (5, 6) to the signalling device (1) takes place in a wireless fashion.

2. Signalling device (1) according to Claim 1, **characterized in that** the transmission of signals from the operator control elements (5, 6) to an electronic system (10) arranged in the signalling device (1) takes place in a wireless fashion by means of magnets (11, 12) which are connected to the operator control elements (5, 6) and which act on sensors (13, 14) in the interior (9) of the grip (4) when the operator control elements (5, 6) are activated.

3. Signalling device according to Claim 2, **characterized in that** the wireless effect takes place through a rigid wall (15).

4. Signalling device according to Claims 1 to 3, **characterized in that** magnetic-field-sensitive elements, in particular digital Hall sensors, are used as sensors (13, 14).

5. Signalling device according to Claims 1 to 4, **characterized in that** the magnets (11, 12) are of annular design.

6. Signalling device according to Claims 1 to 5, **characterized in that** the operator control elements (5, 6) are rotatable and are supported against the grip (4) by means of springs (16, 17).

7. Signalling device according to Claims 1 to 6, **characterized in that** the magnets (11, 12) are each embedded in a magnet holder (18, 19) made of plastic.

8. Signalling device according to Claim 7, **characterized in that** the magnets (11, 12) are snapped into the magnet holders (18, 19).

9. Signalling device according to Claims 1 to 8, **characterized in that** the operator control elements (5, 6) are snapped into the magnet holders (18, 19).

10. Signalling device according to Claims 1 to 9, **characterized in that** locationally fixed holders (38, 39) are provided which are embodied in such a way that they can be snapped into the walls of the chambers (7, 8) using further snap-action connections (36, 37).

11. Signalling device according to Claims 1 to 10, **characterized in that** the operator control elements (5, 6) are guided, with the magnet holders (18, 19) through central bores in the locationally fixed holders (38, 39).

12. Signalling device according to Claims 1 to 11, **characterized in that** the gearshift lever (3) is sealed off in a fluid-tight fashion from the console (2) by means of an elastic bellows (20).

13. Signalling device according to Claims 1 to 12, **characterized in that** condensed moisture which has come about in the console (2) is selectively conducted out downwards via a system composed of an intermediate lid (40) arranged above the electronic system (10), openings (23, 24, 25) and an oblique face (22).

## Revendications

1. Appareil codeur (1) pour changement de vitesse, notamment pour véhicules utilitaires, comprenant une console (2) sur laquelle est disposé un levier de changement de vitesse (3), le levier de changement de vitesse (3) présentant une poignée (4) qui contient des éléments de commande (5, 6),
**caractérisé en ce que**
les éléments de commande (5, 6) sont disposés dans des chambres (7, 8) qui sont fermées de manière étanche vers l'espace intérieur (9) de la poignée (4) et **en ce que** la transmission du signal des éléments de commande (5, 6) à l'appareil codeur (1) s'effectue sans fil.

2. Appareil codeur (1) selon la revendication 1, **caractérisé en ce que** la transmission du signal des éléments de commande (5, 6) à une électronique (10) disposée dans l'appareil codeur (1) s'effectue sans fil au moyen d'aimants (11, 12) qui sont reliés avec les éléments de commande (5, 6) et qui agissent sur des capteurs (13, 14) dans l'espace intérieur (9) de la poignée (4) en cas d'actionnement des éléments de commande (5, 6).

3. Appareil codeur selon la revendication 2, **caractérisé en ce que** l'action sans fil est effectuée à travers une paroi rigide (15).

4. Appareil codeur selon l'une des revendications 1 à 3, **caractérisé en ce que** les capteurs (13, 14) utilisés sont des éléments sensibles au champ magnétique, notamment des capteurs numériques à effet Hall.

5. Appareil codeur selon l'une des revendications 1 à 4, **caractérisé en ce que** les aimants (11, 12) sont réalisés en forme d'anneaux.

6. Appareil codeur selon l'une des revendications 1 à 5, **caractérisé en ce que** les éléments de commande (5, 6) sont rotatifs et s'appuient contre la poignée (4) au moyen de ressorts (16, 17).

7. Appareil codeur selon l'une des revendications 1 à 6, **caractérisé en ce que** les aimants (11, 12) sont à chaque fois enrobés dans un porte-aimant (18, 19) en matière plastique.

8. Appareil codeur selon la revendication 7, **caractérisé en ce que** les aimants (11, 12) sont enclipsés dans les porte-aimants (18, 19).

9. Appareil codeur selon l'une des revendications 1 à 8, **caractérisé en ce que** les éléments de commande (5, 6) sont enclipsés dans les porte-aimants (18, 19).

10. Appareil codeur selon l'une des revendications 1 à 9, **caractérisé en ce que** sont prévus des supports fixes (38, 39) qui sont configurés pour pouvoir être enclipsés dans les parois des chambres (7, 8) avec des liaisons enclipsées (36, 37) supplémentaires.

11. Appareil codeur selon l'une des revendications 1 à 10, **caractérisé en ce que** les éléments de commande (5, 6) avec les porte-aimants (18, 19) sont guidés à travers des orifices centraux des supports fixes (38, 39).

12. Appareil codeur selon l'une des revendications 1 à 11, **caractérisé en ce que** le levier de changement de vitesse (3) est rendu étanche par rapport à la console (2) au moyen d'un soufflet élastique (20).

13. Appareil codeur selon l'une des revendications 1 à 12, **caractérisé en ce que** l'humidité de condensation qui se forme dans la console (2) est évacuée de manière ciblée vers le bas par le biais d'un système constitué d'un couvercle intermédiaire (40) disposé au-dessus de l'électronique (10), d'ouvertures (23, 24, 25) ainsi que d'une surface inclinée (22).
